# EUROPEAN PATENT SPECIFICATION

(11) **EP 2 017 459 B1**
(45) Date of publication and mention of the grant of the patent: **04.04.2018**
(21) Application number: 08252468.7
(22) Date of filing: 18.07.2008
(51) Int. Cl.: F02M 35/04

(54) **Vehicle**
Fahrzeug
Véhicule

(30) Priority: 20.07.2007 JP 2007189654; 06.09.2007 JP 2007231987
(43) Date of publication of application: 21.01.2009
(73) Proprietor: Yamaha Hatsudoki Kabushiki Kaisha, Iwata-shi, Shizuoka 438-8501 (JP)
(72) Inventor: Sudoh, Takehiko, Iwata-shi, Shizuoka-ken 438-8501 (JP); Takahashi, Nobuharu, Iwata-shi, Shizuoka-ken 438-8501 (JP); Noborio, Daichi, Iwata-shi, Shizuoka-ken 438-8501 (JP)
(74) Representative: Moreland, David

(56) References cited:
- EP-A1- 1 464 824
- EP-A2- 1 655 464
- EP-A2- 1 808 585
- EP-A2- 1 845 241
- DE-A1- 19 717 272

## Description

### FIELD OF THE INVENTION

The present invention relates to a vehicle, and more particularly to a vehicle including a funnel that introduces air to an intake port of an engine and an injector that sprays fuel.

### BACKGROUND TO THE INVENTION

Motorcycles and other vehicles are known that include a funnel that introduces air to an intake port of an engine, and an injector that sprays fuel. JP-A-2006-132371 describes a motorcycle including an air cleaner including an air filter, which is where air is introduced from, that introduces air to an engine; a first funnel fixed inside the air cleaner; a second funnel positioned to the upper side of the first funnel; and an upstream injector, provided to the upper side of the second funnel, that sprays fuel toward the second funnel. In this motorcycle, the center lines of the first funnel, the second funnel and the upstream injector match with each other. As a result, the fuel sprayed from the upstream injector is inhibited from dripping due to adhering to an inside wall surface of the second funnel.

However, in the motorcycle described in JP-A-2006-132371, the center lines of the first funnel, the second funnel and the upstream injector match, and thus the upstream injector is disposed to the upper side of the second funnel on an extension of the center line of the first funnel and the second funnel. As a result, the flow of air that is taken into the second funnel having passed through the air filter is easily disturbed by the upstream injector. Thus, flow resistance of the air that is taken into the second funnel increases, thereby causing air intake efficiency to reduce.

The invention has been devised in light of the above-described problems.

EP1845241 describes an engine having an intake port, a fixed funnel for introducing air into the intake port and a movable funnel that is movably disposed on an air supply side of the fixed funnel for introducing the air to the intake port of the engine in conjunction with the fixed funnel. An injector is attached to an upper part of an air cleaner box in order to inject fuel into the intake port of the engine when the engine is rotating at high speed. The injector is disposed above the funnel. Air is introduced into the air cleaner box from an air intake passage 2a via a filter.

Further air intake systems for motor vehicles are known from EP 1 655 464 A2 and EP 1 464 824 A1.

### SUMMARY OF THE INVENTION

The present invention is described in the independent claims. Optional features of the invention are described in the appended dependent claims.

One object of an embodiment of the invention is to provide an engine that can inhibit reduction in air intake efficiency while inhibiting the occurrence of dripping of fuel due to fuel sprayed from an upstream injector adhering to an inside wall surface of a moveable funnel.

A vehicle described herein includes: an engine including an intake port; a fixed funnel that introduces air to the intake port of the engine; a moveable funnel, disposed such that it is capable of moving upward and downward toward an intake opening of the fixed funnel, that introduces air along with the fixed funnel to the intake port of the engine; an air introduction member including an introduction opening for air that is taken into the moveable funnel; and a first injector, disposed on the opposite side from the introduction opening of the air introduction member with respect to a center line of the fixed funnel, that sprays fuel toward the moveable funnel. The moveable funnel is configured such that at least a main portion of a flow of the fuel sprayed from the first injector does not adhere to an inside wall surface of the moveable funnel in a movement track of the moveable funnel as it moves upward and downward.

In the vehicle described herein, the first injector that serves as an upstream injector is disposed, with respect to the center line of the fixed funnel, at the opposite side to where the air taken into the moveable funnel is introduced from. Accordingly, the first injector, which is likely to generate flow resistance in the flow route of the air taken into the moveable funnel from the introduction opening for air such as an air filter, can be disposed at a position far from the introduction opening for the air. As a result, flow resistance of the air taken into the moveable funnel can be inhibited from increasing, and thus air intake efficiency can be inhibited from reducing. Moreover, in the movement track along which the moveable funnel moves upward and downward, at least the main portion of the flow of the fuel sprayed from the first injector does not adhere to the inside wall surface of the moveable funnel. Thus, the fuel sprayed from the first injector passes through the moveable funnel without fuel dripping from the inside wall surface of the moveable funnel. As a result, it is possible to inhibit the occurrence of dripping of fuel from the inside wall surface of the moveable funnel caused by fuel adhering to the inside wall surface of the moveable funnel. Accordingly, the occurrence of dripping of fuel due to adherence of the fuel sprayed from the first injector on the inside wall surface of the moveable funnel can be inhibited, and reduction in air intake efficiency can be inhibited.

Reference is made herein to upward and downward movement of the moveable funnel relative to the intake opening of the fixed funnel, and to upper and lower parts of various elements. Of course, those of skill in the art will recognize that the fixed funnel, and other elements of the vehicle, may be other than vertically oriented and that, for example, a moveable funnel in accordance with an embodiment of the invention may move along a horizontal axis or an inclined axis towards and away from a horizontally oriented or inclined fixed funnel.

Hereinafter, an embodiment of the invention will be described with reference to the appended drawings.

### BRIEF DESCRIPTION OF THE DRAWINGS

These and other aspects of the present invention will now be described, by way of example only, with reference to the accompanying drawings, in which:
FIG. 1 is a side view that shows the overall structure of a motorcycle of an embodiment of the invention;
FIG. 2 is a plan view of the vicinity of funnels of the motorcycle of the embodiment shown in FIG. 1;
FIG. 3 is a cross sectional view of the vicinity of the funnels of the motorcycle of the embodiment shown in FIG. 1;
FIG. 4 is a cross sectional view that illustrates the attachment structure for a cleaner box of an air filter of the motorcycle of the embodiment shown in FIG. 1;
FIG. 5 is a perspective view that shows the state where a moveable funnel of the motorcycle of the embodiment shown in FIG. 1 has been moved to a separated position;
FIG. 6 is a side view that shows the vicinity of an intermediate link lever when the moveable funnel of the motorcycle of the embodiment shown in FIG. 1 has been moved to the separated position;
FIG. 7 is a side view showing the vicinity of an upper side link lever and a lower side link lever when the moveable funnel of the motorcycle of the embodiment shown in FIG. 1 has been moved to the separated position;
FIG. 8 is a perspective view showing the state where the moveable funnel of the motorcycle of the embodiment shown in FIG. 1 has been moved to an abutting position;
FIG. 9 is a side view showing the vicinity of the intermediate link lever when the moveable funnel of the motorcycle of the embodiment shown in FIG. 1 has been moved to the abutting position;
FIG. 10 is a side view of the vicinity of the upper side link lever and the lower side link lever when the moveable funnel of the motorcycle of the embodiment shown in FIG. 1 has been moved to the abutting position;
FIG. 11 is a plan view that illustrates the detailed structure of the vicinity of the funnels of the motorcycle of the embodiment shown in FIG. 1;
FIG 12 is a cross sectional view that illustrates the attachment structure for a throttle body of the fixed funnel of the motorcycle of the embodiment shown in FIG. 1;
FIG. 13 is a cross sectional view that illustrates the attachment structure for the throttle body of the fixed funnel of the motorcycle of the embodiment shown in FIG. 1;
FIG. 14 is a front view of the moveable funnel of the motorcycle of the embodiment shown in FIG. 1;
FIG. 15 is a cross sectional view that illustrates the detailed structure of a seal member of the motorcycle of the embodiment shown in FIG. 1;
FIG. 16 is a cross sectional view that illustrates the detailed structure of the seal member of the motorcycle of the embodiment shown in FIG. 1;
FIG. 17 is a perspective view that illustrates the structure of the upper side link lever and a turning shaft of the motorcycle of the embodiment shown in FIG. 1;
FIG. 18 is a side view that illustrates the structure of the vicinity of the upper side link lever of the motorcycle of the embodiment shown in FIG. 1;
FIG. 19 is a perspective view that illustrates the structure of the lower side link lever and a turning shaft of the motorcycle of the embodiment shown in FIG. 1;
FIG. 20 is a side view that illustrates the structure of the vicinity of the lower side link lever of the motorcycle of the embodiment shown in FIG. 1;
FIG. 21 is an explanatory figure that shows the construction of the vicinity of an ECU of the motorcycle of the embodiment shown in FIG. 1;
FIG. 22 is a figure that illustrates the relationship of a throttle opening degree, an engine rotation speed, and spray of an injector of the motorcycle of the embodiment shown in FIG. 1;
FIG. 23 is a cross sectional view that illustrates the spray of an upstream injector when an intake pipe of the motorcycle of the embodiment shown in FIG. 1 is shortened; and
FIG. 24 is a cross sectional view that illustrates the track of the intake pipe of the motorcycle of the embodiment shown in FIG. 1 when change over from a long state to a shortened state is performed, and spray of the upstream injector.

### DETAILED DESCRIPTION OF THE DRAWINGS

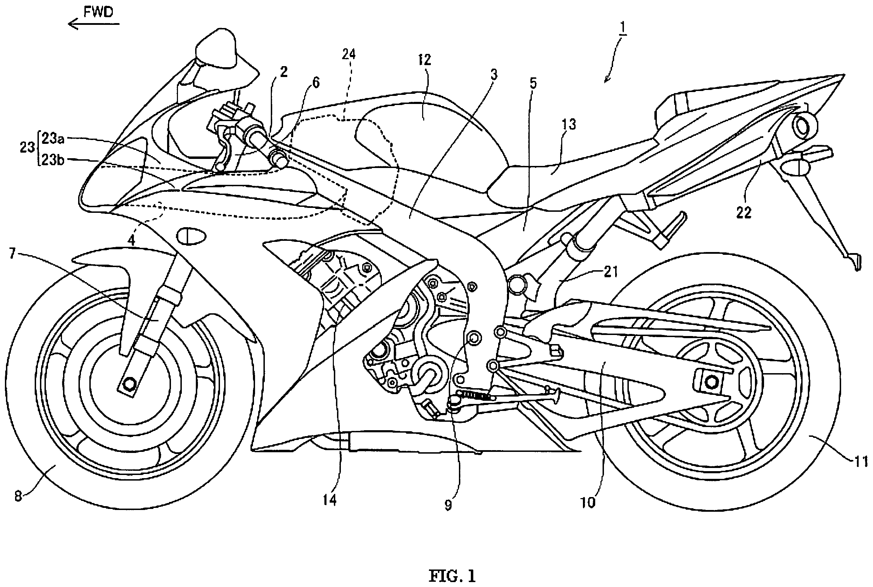

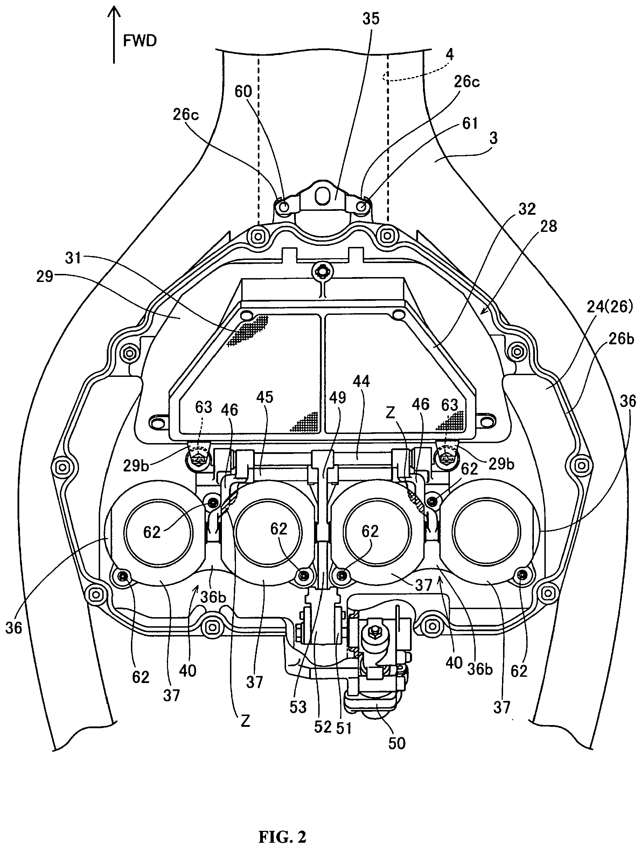

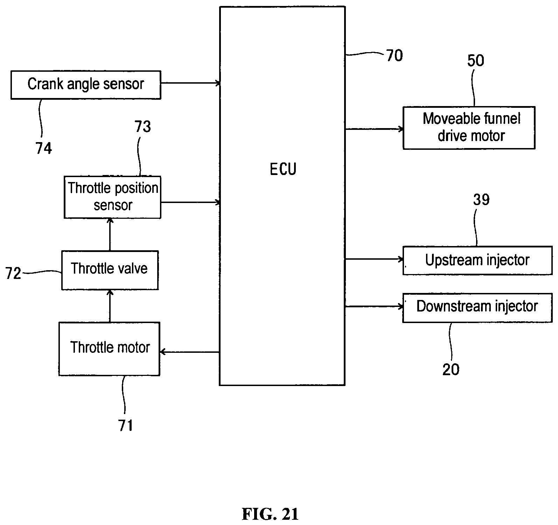

FIG. 1 is a side view showing the overall structure of a motorcycle according to an embodiment of the invention. FIG. 2 to FIG. 20 are figures that illustrate in detail the structure of a funnel of the motorcycle according to the embodiment shown in FIG. 1. Moreover, FIG. 21 is a figure that illustrates the structure of the vicinity of an ECU of the motorcycle according to the embodiment shown in FIG. 1. Note that, in this embodiment an example related to a motorcycle is explained as one example of a vehicle of the invention. In the figures, FWD indicates the forward direction in the running direction of the motorcycle. First, the structure of a motorcycle 1 according to the embodiment will be explained with reference to FIG. 1 to FIG. 22.

In the structure of the motorcycle 1 according to the embodiment, a front end section of a main frame 3 is connected to a head pipe 2 as shown in FIG. 1. The main frame 3, as can be seen from FIG. 2, is disposed so as to split to the left and right and extend in the forward direction of a vehicle body (the direction of arrow FWD). In addition, an air induction passage 4 is provided on the main frame 3 in order to introduce air to a cleaner box 24, described hereinafter. Furthermore, the main frame 3 is formed to extend downward to the rear side as shown in FIG. 1. Further, a seat rail 5 that extends upward to the rear side is connected to the main frame 3. In addition, a handle 6 is turnably attached to the head pipe 2. Moreover, a front fork 7 is attached to a lower side of the handle 6. A front wheel 8 is rotatably attached to a lower end section of the front fork 7.

Moreover, a front end section of a swing arm 10 is attached to a rear end section of the main frame 3 via a pivot shaft 9. A rear wheel 11 is rotatably attached to a rear end section of the swing arm 10. In addition, a fuel tank 12 is disposed above the main frame 3, and a seat 13 is disposed above the seat rail 5. Furthermore, an engine 14 is mounted beneath the main frame 3.

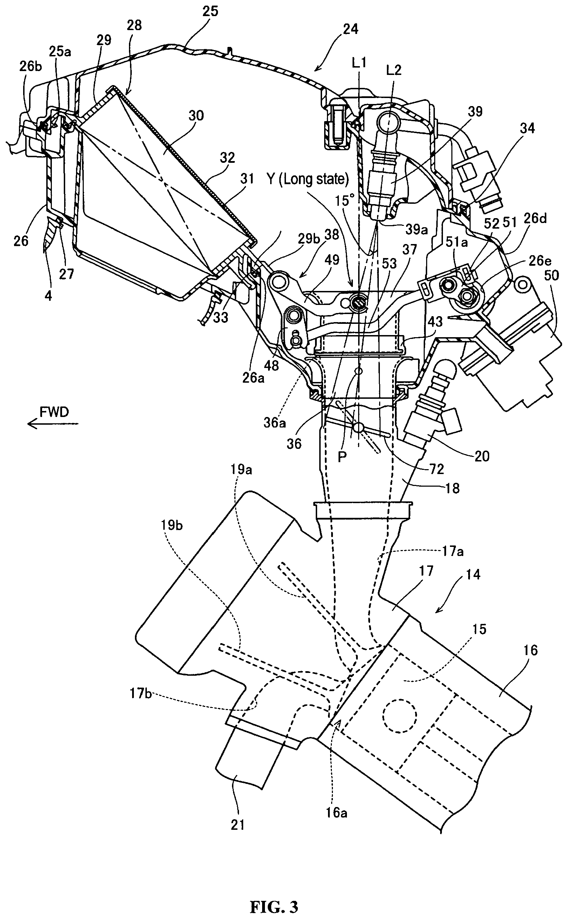

The engine 14, as shown in FIG. 3, includes a piston 15, a cylinder 16, a cylinder head 17, and a throttle body 18. The piston 15 is slidably fitted inside the cylinder 16, and the cylinder head 17 is positioned so as to cover an opening at one end of the cylinder 16. In addition, an intake port 17a and an exhaust port 17b are formed in the cylinder head 17. The intake port 17a is provided to supply an air-fuel mixture that includes air and fuel to a combustion chamber 16a of the cylinder 16. Moreover, the exhaust port 17b is provided to exhaust residual gas that remains after combustion from the combustion chamber 16a of the cylinder 16. Further, an intake valve 19a and an exhaust valve 19b are respectively provided in the intake port 17a and the exhaust port 17b. The throttle body 18 is attached to an opening of the intake port 17a. In addition, a downstream injector 20 is attached to the throttle body 18 and injects fuel into the intake port 17a. Note that, the downstream injector 20 is one example of a "second injector" of the invention. Moreover, an exhaust pipe 21 is attached to an opening of the exhaust port 17b, and a muffler 22 (refer to FIG. 1) is connected to the exhaust pipe 21. Note that, FIG. 3 only shows one cylinder 16 but in reality four cylinders 16 are arranged at determined distances apart from each other in the vehicle body width direction. In other words, the engine 14 of the motorcycle 1 according to the embodiment is a 4 cylinder in-line engine.

In addition, as shown in FIG. 1, a front cowl 23 including an upper cowl 23a and a lower cowl 23b is provided so as to cover a front side of the vehicle body. Moreover, as shown in FIG. 1 and FIG. 2, the cleaner box 24 is disposed between the main frames 3 branched into left and right, and is supplied with air from the air induction passage 4. The cleaner box 24, as shown in FIG. 3, is disposed at the intake side of the throttle body 18 of the engine 14, and includes an upper side box section 25 and a lower side box section 26. Moreover, an air filter 28 is provided inside the cleaner box 24, and cleans air supplied from the air induction passage 4 via a sponge member 27. Note that, the cleaner box 24 is one example of an "air introduction member" of the invention, and the air filter 28 is one example of an "introduction opening" of the invention.

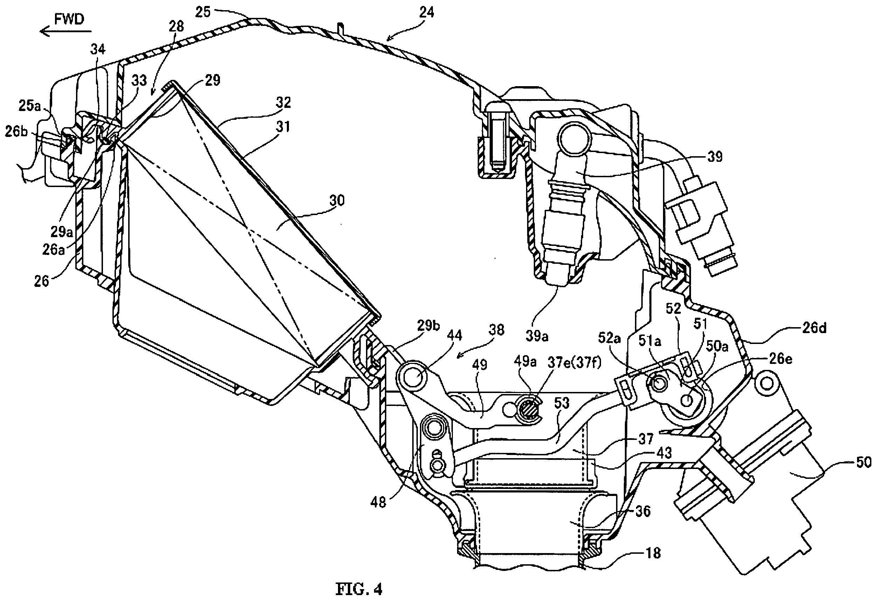

In addition, as shown in FIG. 2 and FIG. 3, the air filter 28 includes a resin made body 29, a filter element 30 (refer to FIG. 3), an extinguishing net 31 and a cover section 32. A protrusion 29a is formed integrally around the whole circumference of an edge section of the body 29 of the air filter 28, as shown in FIG. 4. In addition, a recess 26a is formed integrally with the lower side box section 26 and corresponds with the protrusion 29a of the air filter 28. In addition, a rubber made seal member 33 is disposed between the recess 26a of the lower side box section 26 and the protrusion 29a of the body 29. Moreover, the air filter 28 is sandwiched between the upper side box section 25 and the lower side box section 26 of the cleaner box 24 and is thereby fixed therebetween. In addition, a detachment inhibiting member 29b is formed integrally with the body 29 of the air filter 28 as shown in FIG. 2 and FIG. 3, and inhibits a screw 63 (refer to FIG. 2), described hereinafter, from detaching to the upper side.

Moreover, referring to FIG. 2 and FIG. 4, a protrusion 26b is formed integrally around the entire circumference of the edge section of the lower side box section 26. In addition, a recess 25a into which the protrusion 26b of the lower side box section 26 is inserted is formed integrally with the upper side box section 25 as shown in FIG. 4. Furthermore, a rubber made seal member 34 is disposed between the recess 25a of the upper side box section 25 and the protrusion 26b of the lower side box section 26. In addition, two fixing members 26c at the front of the lower side box section 26 are fixed to the main frame 3 by connecting members 60 and 61 via a fixing bracket 35 as shown in FIG. 2.

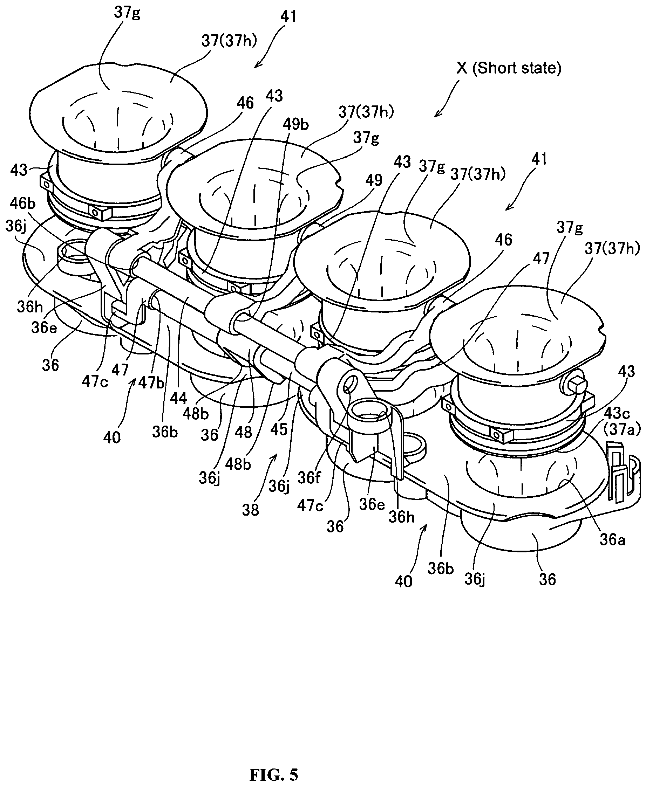

Note that, in this embodiment, as shown in FIG. 3 and FIG. 5, a fixed funnel 36, a moveable funnel 37 and a funnel moving mechanism 38 are provided inside the cleaner box 24 (refer to FIG. 3) at positions to the upstream side of the engine 14 (refer to FIG. 3) and to the downstream side (the clean side) of the air filter 28 (refer to FIG. 3). The fixed funnel 36 and the moveable funnel 37 are provided for each one of the cylinders 16 of the engine 14 as shown in FIG. 2 and FIG. 3. Moreover, the fixed funnel 36 is fixed with respect to the lower side box section 26 of the cleaner box 24, and functions to introduce cleaned air within the cleaner box 24 to the intake port 17a. Furthermore, the moveable funnel 37 is positioned at the intake side (the upstream side) of the fixed funnel 36, and functions, along with the fixed funnel 36, to introduce cleaned air within the cleaner box 24 to the intake port 17a.

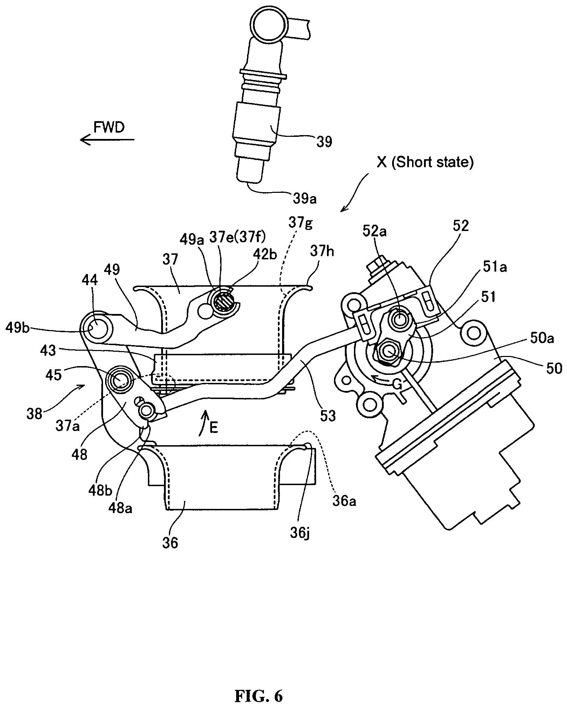

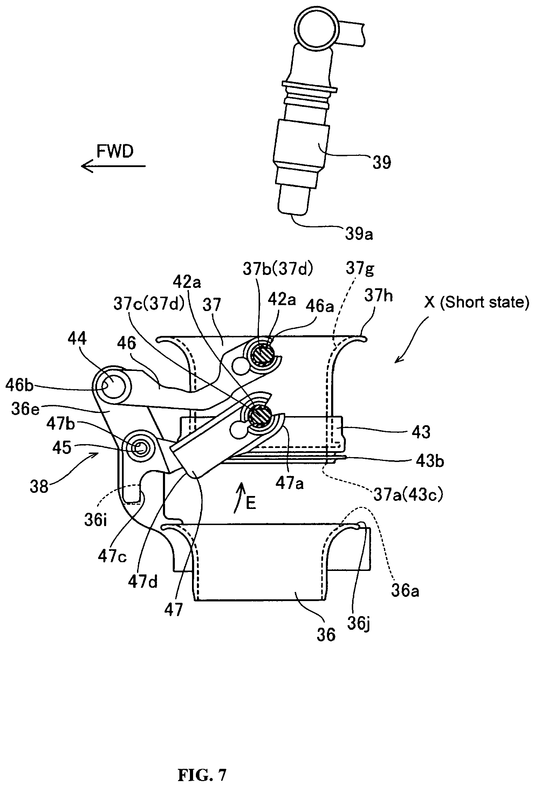

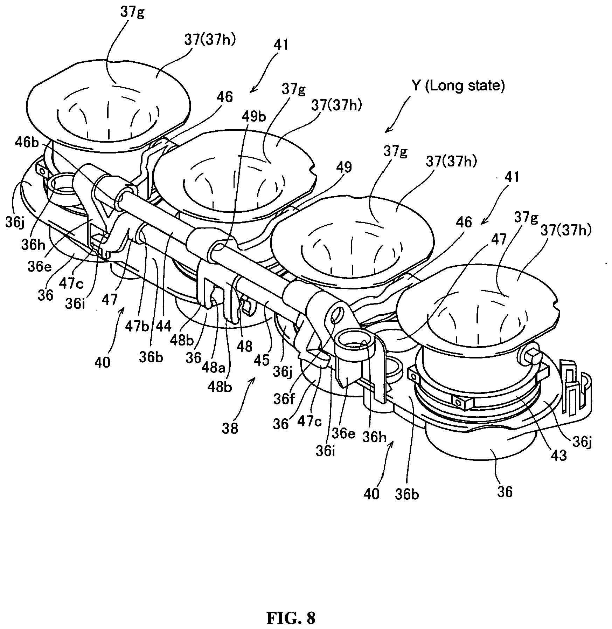

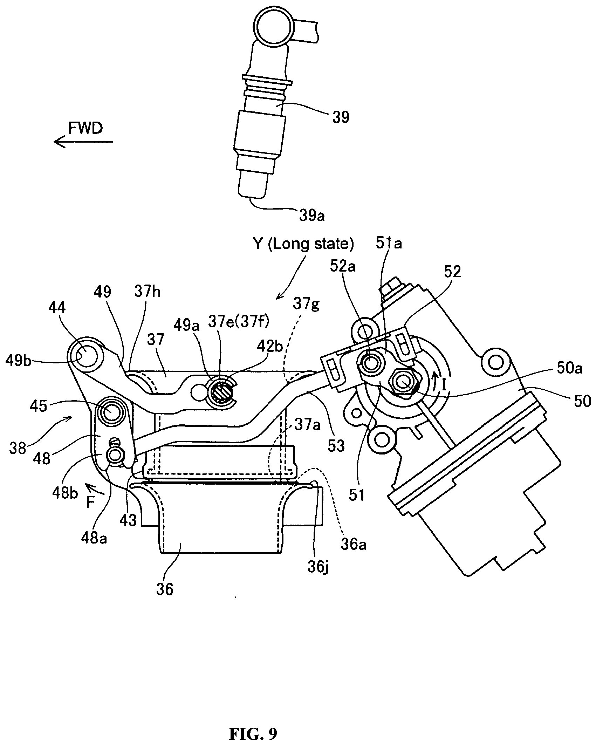

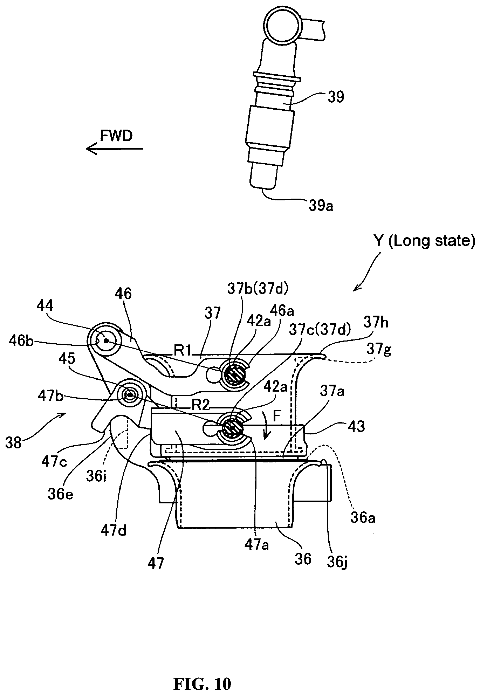

In addition, as can be seen from FIG. 5 to FIG. 10, the moveable funnel 37 can be moved between a separated position X (the state shown in FIG. 5 to FIG. 7) and an abutting position Y (the state shown in FIG. 8 to FIG. 10). The separated position X is a position at which an opening 37a on the fixed funnel 36 side is separated away from an opening 36a on the intake side of the fixed funnel 36 (refer to FIG. 6 and FIG. 7) . The abutting position Y is a position at which the opening 37a of the moveable funnel 37 (refer to FIG. 9 and FIG. 10) abuts against the opening 36a of the fixed funnel 36 (refer to FIG. 9 and FIG. 10) (the state shown in FIG. 8 to FIG. 10). Moreover, the opening 37a of the moveable funnel 37 on the fixed funnel 36 side of the embodiment is provided with a second seal 43c of a seal member 43, described hereinafter. Note that, the opening 36a is one example of an "intake opening" of the invention.

Note that, referring to FIG. 5, when the moveable funnel 37 has been moved to the separated position X (the state shown in FIG. 6 and FIG. 7), the intake pipe that connects from the cleaner box 24 (refer to FIG. 3) to the cylinder 16 (refer to FIG. 3) is formed by the fixed funnel 36, the throttle body 18 (refer to FIG. 3) and the intake port 17a (refer to FIG. 3). On the other hand, referring to FIG. 8, when the moveable funnel 37 is moved to the abutting position Y (the state shown in FIG. 9 and FIG. 10), the intake pipe that connects from the cleaner box 24 (refer to FIG. 3) to the cylinder 16 (refer to FIG. 3) is formed by the moveable funnel 37, the fixed funnel 36, the throttle body 18 (refer to FIG. 3), and the intake port 17a (refer to FIG. 3). In addition, the funnel moving mechanism 38 (an upper side link lever 46 and a lower side link lever 47, described hereinafter) functions to provide moveable support such that the moveable funnel 37 can be moved between the separated position X and the abutting position Y in line with an air introduction direction of the fixed funnel 36.

Furthermore, in this embodiment, as shown in FIG. 3, an upstream injector 39 is attached to an upper section of the upper side box section 25 of the cleaner box 24 as shown in FIG. 4. The upstream injector 39 is provide in order to inject fuel from a fuel injection member 39a to the intake port 17a (refer to FIG. 3) along with the downstream injector 20 (refer to FIG. 3) when the engine 14 (refer to FIG. 3) is rotating at high speed. This feature will be explained in more detail later. In addition, the upstream injector 39 is positioned to the upper side of the moveable funnel 37 so as to face the opening 36a of the intake side of the fixed funnel 36. Note that, the upstream injector 39 is one example of a "first injector" of the invention.

Note that, in this embodiment, as shown in FIG. 3, the upstream injector 39 is disposed, with respect to a center line L1 of the fixed funnel 36, on the opposite side to the side of the air filter 28 which is where air is introduced from. In addition, a center line L2 of the upstream injector 39 is disposed to incline by around 5 degrees to around 10 degrees to the air filter 28 side with respect to the center line L1 of the fixed funnel 36. In addition, an intersection P of the center line L1 of the fixed funnel 36 and the center line L2 of the upstream injector 39 is further to the lower side than an upper end surface of the opening 36a of the fixed funnel 36.

In addition, in this embodiment, as can be seen from FIG. 3, the upstream injector 39 sprays fuel at a static spray angle of around 15 degrees. Note that, the term spray angle (the static spray angle) refers to the angle at which around 90% or more of the fuel injected during a static state (when no air is flowing) is sprayed.

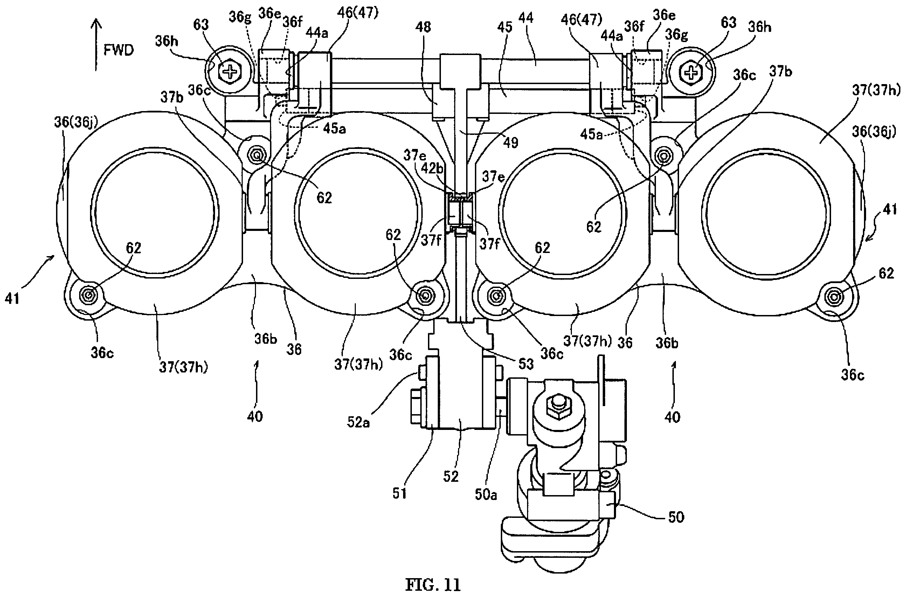

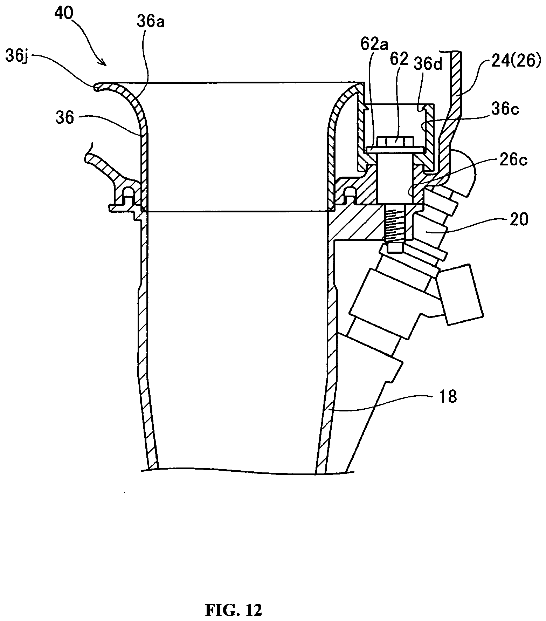

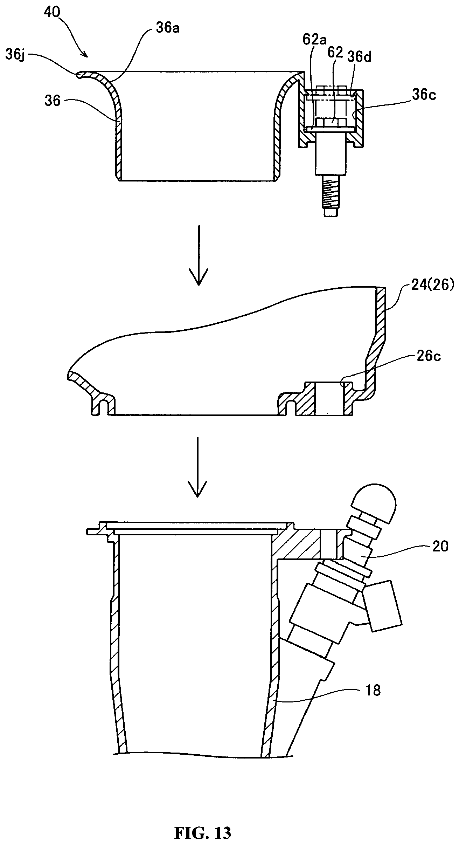

In addition, the fixed funnel 36, as shown in FIG. 2 and FIG. 5, has a structure including a pair of neighboring fixed funnels 36 that are integrated using a connection member 36b. More specifically, in this embodiment, a pair of members 40, which integrate the neighboring pairs of fixed funnels 36, is provided. In addition, as shown in FIG. 11, three screw insertion holes 36c into which screws 62 are inserted (refer to FIG. 12) are provided in each member 40 that integrates the pair of fixed funnels 36. Furthermore, referring to FIG. 12, the fixed funnel 36 (the member 40) is attached to the cleaner box 24 (the lower side box section 26) and the throttle body 18 by the screws 62 that are screwed into the screw insertion holes 36c. Note that, the screw insertion holes 36c into which the screws 62 are inserted are also provided in the lower side box section 26 of the cleaner box 24. Furthermore, an engagement member 36d is provided in an inner surface of each of the screw insertion holes 36c of the fixed funnel 36 (the member 40). As a result, as shown in FIG. 13, a head 62a of each screw 62 can be engaged with the engagement member 36d before each screw 62 is attached to the throttle body 18, and thus each screw 62 can be inhibited from detaching away from the screw insertion hole 36c to the upper side.

Moreover, as shown in FIG. 5, a support strut 36e is provided integrally in each member 40 that integrates the pairs of fixed funnels 36. A turning shaft support hole 36f is provided in each support strut 36e as shown in FIG. 11, and turnably supports an end of the a turning shaft 44, described hereinafter. Furthermore, a turning shaft support hole 36g is provided beneath the turning shaft support hole 36f of the support strut 36e and turnably supports an end of a turning shaft 45, described hereinafter.

Moreover, as shown in FIG. 5, fixing holes 36h are respectively provided in each of the support struts 36e of the two members 40. In addition, the fixing holes 36h of the support struts 36e of the two members 40 are screw-fixed by the screws 63 to the lower side box section 26 (refer to FIG. 2) as shown in FIG. 11. Moreover, as shown in FIG. 5, a regulation member 36i (refer to FIG. 7 and FIG. 10) is provided in a front section of each of the two support struts 36e. The regulation member 36i abuts against a stopper 47c, described hereinafter, when the opening 37a on the fixed funnel 36 side of the moveable funnel 37 is positioned at the separated position X (the state of FIG. 5) away from the opening 36a on the intake side of the fixed funnel 36. Each regulation member 36i, as shown in FIG. 7 and FIG. 10, has a recessed shape that extends toward a rear side of the support strut 36e from the front section thereof.

Further, as shown in FIG. 2 and FIG. 5, an intake portion 36j is formed in the opening 36a on the intake side of each fixed funnel 36. The intake portion 36j is formed to enlarge toward the outside in the redial direction of the fixed funnel 36 when viewed from the air introduction direction. Each intake portion 36j of each of the fixed funnels 36 is formed to protrude upwards and have a ring shape that is aligned with the opening 36a. As a result, when the opening 37a on the fixed funnel 36 side of the moveable funnel 37 (refer to FIG. 6 and FIG. 7) is positioned at the separated position X (the state shown in FIG. 5) away from the opening 36a on the intake side of the fixed funnel 36 (refer to FIG. 6 and FIG. 7), air can flow into the fixed funnel 36 along the intake portion 36j.

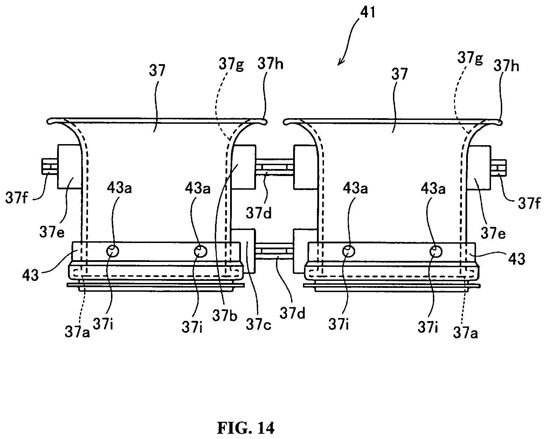

In addition, as shown in FIG. 11 and FIG. 14, the moveable funnel 37 has a structure including a neighboring pair of moveable funnels 37 that are integrated using an up-down pair of support shafts 37b and 37c (refer to FIG. 14). More particularly, this embodiment includes two members 41 that integrate neighboring pairs of the moveable funnels 37. In addition, the pair of support shafts 37b and 37c is positioned between the pair of moveable funnels 37 of each member 41. Further, the up-down pair of support shafts 37b and 37c provides support such that a fitting member 46a of the upper side link lever 46 and a fitting member 47a of the lower side link lever 47, described hereinafter, are turnable. In addition, a small diameter portion 37d is formed respectively in each of the support shafts 37b and 37c, as shown in FIG. 14.

Moreover, as shown in FIG. 7, a split bush 42a is fitted to each of the small diameter portions 37d of the support shafts 37b and 37c of each moveable funnel 37 (the member 41). The split bush 42a functions to allow the upper side link lever 46, described hereinafter, to turn smoothly with respect to the support shaft 37b, and functions to allow the lower side link lever 47 to turn smoothly with respect to the support shaft 37c. In addition, the split bush 42b, as shown in FIG. 9 and FIG. 11, is fitted to small diameter portions 37f of the support shafts 37e positioned between the members 41 that integrate the pairs of moveable funnels 37. Note that, just one split bush 42b is positioned between the members 41 that integrate the pairs of moveable funnels 37, and straddles between the small diameter portions 37f of the pair of support shafts 37e.

Furthermore, as shown in FIG. 11, when viewed from the direction in which air is introduced, intake portions 37h are formed respectively in each opening 37g on the intake side of the moveable funnel 37, and are formed to enlarge toward the outside in the radial direction of the moveable funnel 37. Each of the intake portions 37h of the moveable funnels 37 is formed to protrude upward. In addition, ends of each intake portion 37h in the vehicle width direction are formed to extend linearly in the running direction (the direction of arrow FWD). Furthermore, an upper section of the screw insertion hole 36c on the opposite side to the running direction (the direction of arrow FWD) of each intake portion 37h is formed with a notch shape to allow the screw 62 to be easily placed in the screw insertion hole 36c of the fixed funnel 36.

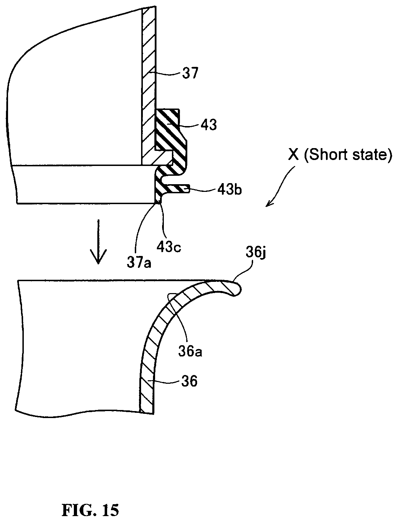

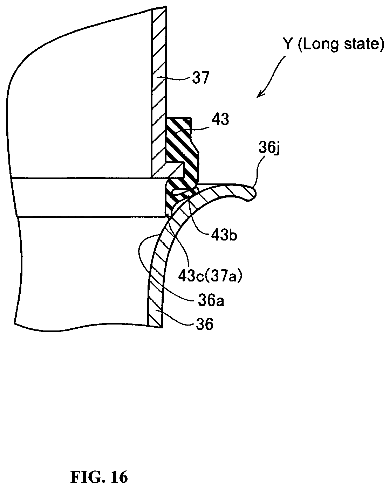

Moreover, as shown in FIG. 5 and FIG. 8, the rubber made seal member 43 is fitted to the lower end section of each moveable funnel 37 at the fixed funnel 36 side. Four engagement holes 43a are provided in the seal member 43, as can be seen from FIG. 14. Four protrusions 37i of the moveable funnel 37 are engaged with the engagement holes 43a. As a result, the seal member 43 is inhibited from detaching away to the lower side from the lower end section of the moveable funnel 37. In addition, as shown in FIG. 15, a first seal 43b that extends toward the side, and the second seal 43c that extends downward are formed in the seal member 43. Moreover, when the moveable funnel 37 is moved to the abutting position Y (the state shown in FIG. 16) from the separated position X (the state shown in FIG. 15), the first seal 43b abuts against the fixed funnel 36 and seals the gap between the moveable funnel 37 and the fixed funnel 36. Moreover, as a result of the first seal 43b elastically deforming upward, the second seal 43c also abuts against the fixed funnel 36 and seals the gap between the moveable funnel 37 and the fixed funnel 36. In other words, the seal member 43 has a two-layer seal structure. Note that, as described above, the second seal 43c of the seal member 43 is provided at the opening 37a of the moveable funnel 37 on the intake side of the fixed funnel 36 according to the embodiment.

In addition, in this embodiment, as shown in FIG. 7 and FIG. 10, the funnel moving mechanism 38 uses the upper side link lever 46 and the lower side link lever 47, described hereinafter, to moveably support the moveable funnel 37 such that the moveable funnel 37 can move in the air introduction direction of the fixed funnel 36. More particularly, the upper side link lever 46 and the lower side link lever 47 moveably support the moveable funnel 37 such that it can move between the separated position X (the state shown in FIG. 6 and FIG. 7) and the abutting position Y (the state shown in FIG. 9 and FIG. 10).

With regard to the detailed structure of the funnel moving mechanism 38, as shown in FIG. 5 and FIG. 11, the turning shaft support hole 36f at the upper side of the support strut 36e provided in the fixed funnel 36 (the member 40) (refer to FIG. 11) turnably support the ends of the turning shaft 44. In addition, the turning shaft support hole 36g at the lower side of the support strut 36e turnably support the ends of the turning shaft 45 (refer to FIG. 11). In addition, as shown in FIG. 11, a stepped portion 44a is provided in one and the other ends of the turning shaft 44, and the stepped portion 44a is in contact with the opening ends of the turning shaft support hole 36f at the upper side of the support strut 36e via a bush, not shown in the figures. Moreover, a stepped portion 45a is provided in one and the other ends of the turning shaft 45, and the stepped portion 45a is in contact with the opening ends of the turning shaft support hole 36g at the lower side of the support strut 36e via a bush, not shown in the figures. As a result, movement of the turning shaft 44 and the turning shaft 45 in the axial direction is regulated.

In addition, in this embodiment, when viewed from the direction in which air is introduced, the turning shaft 44 at the upper side is located at a position that is further away from the center axis of the moveable funnel 37 than the turning shaft 45 at the lower side. More specifically, the turning shaft 44 at the upper side is positioned further toward the traveling direction (the direction of the arrow FWD) side than the turning shaft 45 at the lower side. In addition, the turning shaft 44, as shown in FIG. 10, is positioned at the upper side with respect to an end surface of the opening 37g (the intake portion 37h) of the intake side of the moveable funnel 37 (the opposite side to the side where the fixed funnel 36 is positioned) when the moveable funnel 37 is positioned at the abutting position Y. In other words, when the moveable funnel 37 is positioned at the abutting position Y, the turning shaft 44 is positioned further to the upper side than the upper end of the moveable funnel 37.

Furthermore, as shown in FIG. 11, the upper side link lever 46, which is made of resin, is attached respectively to one and the other end section sides of the turning shaft 44 at the upper side such that the upper side link lever 46 turns along with the turning shaft 44 at the upper side. More particularly, knurling is performed on the section where the upper side link lever 46 is attached to the turning shaft 44 at the upper side (a section that corresponds with the turning shaft insertion hole 46b, described hereinafter), and the turning shaft 44 at the upper side and the upper side link lever 46 are formed as an integrated unit. In addition, the lower side link lever 47, which is made of resin, is attached respectively to one and the other end section sides of the turning shaft 45 at the lower side such that the lower side link lever 47 turns along with the turning shaft 45 at the lower side. Moreover, the turning shaft 45 at the lower side and the lower side link lever 47, like the turning shaft 44 at the upper side and the upper side link lever 46, are formed as an integrated unit. Note that, the upper side link lever 46 is one example of a "first arm" of the invention, and the lower side link lever 47 is one example of a "second arm" of the invention.

Note that, in this embodiment, the upper side link lever 46 and the lower side link lever 47, as shown in FIG. 10, have radiuses of turn R1 and R2 that are different from each other, respectively.

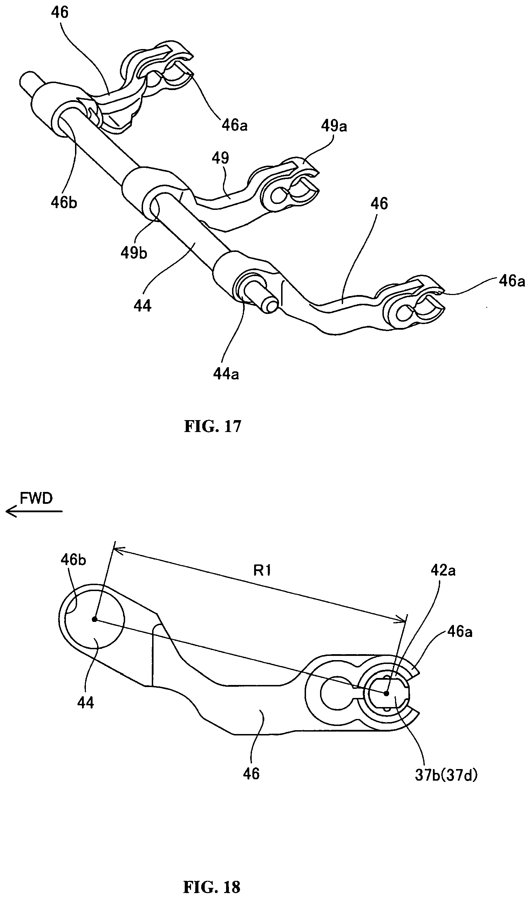

More specifically, the upper side link lever 46, as can be seen from FIG. 10 and FIG. 17, includes the fitting member 46a and the turning shaft insertion hole 46b. As shown in FIG. 10 and FIG. 18, the support shaft 37b (the small diameter portion 37d) at the upper side of the moveable funnel 37 is fitted to the fitting member 46a of the upper side link lever 46 with the split bush 42a interposed therebetween. In addition, the upper side link lever 46 turns along with turning of the turning shaft 44, turns in the same direction as the direction of turn of the turning shaft 44, and turns centering on the turning shaft insertion hole 46b. More particularly, the upper side link lever 46, as shown in FIG. 18, is structured such that the distance between the center of the fitting member 46a and the center of the turning shaft insertion hole 46b is the radius of turn R1.

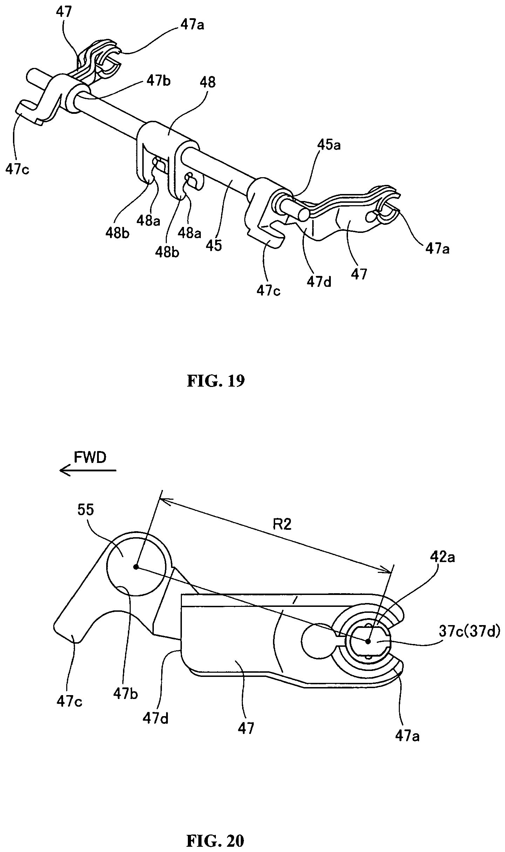

Moreover, the lower side link lever 47, as shown in FIG. 10 and FIG. 19, includes the fitting member 47a, a turning shaft insertion hole 47b, and two stoppers 47c and 47d. The support shaft 37c (the small diameter portion 37d) at the lower side of the moveable funnel 37 is fitted to the fitting member 47a of the lower side link lever 47 with the split bush 42a interposed therebetween as shown in FIG. 10 and FIG. 20. In addition, the lower side link lever 47 turns along with turning of the turning shaft 45, turns in the same direction as the direction of turn of the turning shaft 45, and turns centering on the turning shaft insertion hole 47b. More particularly, the lower side link lever 47, as shown in FIG. 20, is structured such that the distance between the center of the fitting member 47a and the center of the turning shaft insertion hole 47b is the same as radius of turn R2.

In addition, the radius of turn R1 that is the distance between the center of the fitting member 46a of the upper side link lever 46 and the center of the turning shaft insertion hole 46b is larger than the radius of turn R2 that is the distance between the center of the fitting member 47a of the lower side link lever 47 and the center of the turning shaft insertion hole 47b as shown in FIG. 10. As a result of adopting this structure, even though the turning shaft 44 of the upper side link lever 46 is positioned further toward the front in the running direction than the turning shaft 45 of the lower side link lever 47 as in this embodiment, the opening 37a of the moveable funnel 37 when the moveable funnel 37 is moved to the abutting position Y and the opening 37a of the moveable funnel 37 when the moveable funnel 37 is moved to the separated position X can be adjusted such that the positions are substantially the same when viewed from the direction in which air is introduced.

Moreover, when viewed from the direction of extension of the turning shaft 44 provided in the upper side link lever 46, the upper side link lever 46 is formed such that it bends downward (in the direction where the fixed funnel 36 is disposed). In addition, the section of the upper side link lever 46 in the vicinity of the fitting member 46a is positioned further to the lower side (the side where the fixed funnel 36 is disposed) than the opening 37g (the intake portion 37h) on the intake side of the moveable funnel 37. Moreover, as shown in FIG. 11, the upper side link lever 46 and the lower side link lever 47, when viewed from the direction in which air is introduced, include an overlapping portion Z where a portion of the intake portion 37h of the moveable funnel 37 overlaps. As a result, it is possible to dispose the moveable funnel 37 including the intake portion 37h in the section where the upper side link lever 46 and the lower side link lever 47 are disposed in a space with a small size when viewed from the direction in which air is introduced. Accordingly, it is possible to effectively use the space for providing the moveable funnel 37.

Furthermore, the upper side link lever 46 and the lower side link lever 47 are respectively bent so as to avoid the upper portion (a given portion) of the two screw insertion holes 36c at the running direction (the direction of the arrow FWD) side of the fixed funnel 36 when viewed from the direction in which air is introduced. As a result, when the screws 62 are used to fix the fixed funnel 36 to the cleaner box 24 (the lower side box section 26), the screws 62 can easily be placed in the two screw insertion holes 36c at the running direction (the direction of the arrow FWD) side.

In addition, in this embodiment, as shown in FIG. 7, when the lower side link lever 47 has moved a determined turn amount in direction E (when the moveable funnel 37 has reached the separated position X), the stopper 47c of the lower side link lever 47 abuts against the regulation member 36i of the support strut 36e of the fixed funnel 36. Thus, the stopper 47c functions to regulate turning in direction E of the lower side link lever 47. In addition, when the moveable funnel 37 has reached the separated position X, the stopper 47 is fitted within the recess of the regulation member 36i. Moreover, as shown in FIG. 10, when the lower side link lever 47 has moved a determined turn amount in direction F (when the moveable funnel 37 has reached the abutting position Y), the stopper 47d abuts against a rear portion of the support strut 36e of the fixed funnel 36. Thus, the stopper 47d functions to regulate turning in direction F of the lower side link lever 47. In addition, the stopper 47d abuts against the rear portion of the support strut 36e in the case that the elastic force of the above-described rubber made seal member 43 has weakened, but in the case that the elastic force of the seal member 43 has not weakened, the stopper 47d does not abut against the support strut 36e.

In addition, the stoppers 47c and 47d of the lower side link lever 47 protrude downward (the side opposite to the side where the upper side link lever 46 is disposed). As a result, the distance between the upper side link lever 46 and the lower side link lever 47 can be made smaller. As a result, even in the case that the upward-downward direction length of the moveable funnel 37 is small, the moveable funnel 37 can be attached without any contact of the upper side link lever 46 and the lower side link lever 47. Moreover, as shown in FIG. 19, the stoppers 47c and 47d of the lower side link lever 47 protrude toward the outside in the vehicle width direction.

Furthermore, as can be seen from FIG. 5 and FIG. 8, a support portion 48 that turns along with the turning shaft 45 is provided in the turning shaft 45 at the lower side. The support portion 48 is formed by a pair of retaining tabs 48b in which notches 48a (refer to FIG. 8) are respectively formed.

In addition, referring to FIG. 6 and FIG. 9, an intermediate link lever 49 is turnably attached to the split bush 42b fitted to the support shaft 37e (the small diameter portion 37f) positioned between the members 41 (refer to FIG. 11). More particularly, a fitting member 49a that can be engaged with the split bush 42b is formed at one side of the intermediate link lever 49. The fitting member 49a can turnably be engaged with the split bush 42b. Moreover, the intermediate link lever 49 is formed integrally with the turning shaft 44 at the upper side in a similar manner to the upper side link lever 46 and the lower side link lever 47. In other words, the turning shaft 44 is fitted to the turning shaft insertion hole 49b such that the intermediate link lever 49 can turn along with the turning shaft 44 at the upper side.

As a result of the support portion 48, the upper side link lever 46 and the lower side link lever 47 having the above-described structure, as shown in FIG. 6 and FIG. 7, when the lower side link lever 47 turns in direction E (refer to FIG. 7) as a result of the support portion 48 being turned in direction E (refer to FIG. 6), the moveable funnel 37 is moved in the direction away from the fixed funnel 36. Moreover, as shown in FIG. 9 and FIG. 10, when the lower side link lever 47 turns in direction F (refer to FIG. 10) as a result of the support portion 48 being turned in direction F (refer to FIG. 9), the moveable funnel 37 is moved in the direction toward the fixed funnel 36. Note that, as shown in FIG. 7 and FIG. 10, the turn amount of the upper side link lever 46 and the lower side link lever 47 is adjusted such that, when viewed from the opening direction of the fixed funnel 36, the position of the opening surface of the moveable funnel 37 on the side of the opening 36a of the fixed funnel 36 at the separated position X (the state shown in FIG. 7) is the same as the position of the opening surface of the moveable funnel 37 on the side of the opening 36a of the fixed funnel 36 at the abutting position Y (the state shown in FIG. 10). Accordingly, when the engine 14 is rotating at high speed, even if the opening 37a of the moveable funnel 37 is separated away from the opening 36a of the fixed funnel 36, the flow of air which is taken in through the fixed funnel 36 after passing through the moveable funnel 37 is linear. Accordingly, increase in air flow resistance can be inhibited. As a result, when the engine 14 is rotating at high speed (in the case that the moveable funnel 37 is separated away from the fixed funnel 36), it is possible to inhibit reduction in air intake efficiency.

Moreover, as can be seen from FIG. 11, the upper side link lever 46 and the lower side link lever 47 (refer to FIG. 5) turn as a result of driving force of a moveable funnel drive motor 50 that is positioned to the outside of the cleaner box 24 (refer to FIG. 3). More particularly, the moveable funnel drive motor 50 is disposed to the rear side of the moveable funnel 37 in the running direction (the direction of the arrow FWD) of the vehicle. Furthermore, an end section of one end of a turning lever 51 is attached to an output shaft 50a of the moveable funnel drive motor 50, as shown in FIG. 6. An end section of the other end of the turning lever 51 is provided with a retaining portion 51a that is formed as a notch.

The turning lever 51, as shown in FIG. 3, is disposed inside the lower side box section 26 (a protruding portion 26d) via an opening 26e of the protruding portion 26d of the lower side box section 26 of the cleaner box 24. In addition, as shown in FIG. 6, protrusions 52a provided at both side surfaces of a moving member 52 are attached to the retaining portion 51a of the turning lever 51 such that it is possible to swing with respect to the retaining portion 51a.

In addition, as shown in FIG. 21, an ECU (Engine Control Unit) 70 controls the drive of the moveable funnel drive motor 50, and a fuel spray amount of the upstream injector 39 and the downstream injector 20. Note that, the ECU 70 is one example of a "control portion" of the invention. In addition, as a result of the control of the ECU 70, a throttle valve 72 is opened and closed when a throttle motor 71 is driven to rotate, and the opening degree of the throttle valve 72 (the throttle opening degree) is detected by a throttle position sensor 73. The throttle valve 72, as shown in FIG. 3, is disposed inside the throttle body 18, and adjusts an intake amount of air-fuel mixture of fuel and air that is taken into the engine 14. Note that, the throttle motor 71 is one example of a "throttle opening-closing member" of the invention. Furthermore, the rotation speed of the engine 14 is detected by a crank angle sensor 74 that detects the rotation speed of a crank (not shown in the figures).

In addition, in this embodiment, the ECU 70 uses the rotation speed of the engine 14 detected by the crank angle sensor 74 and the throttle opening degree detected by the throttle position sensor 73 as a basis for controlling the drive of the moveable funnel drive motor 50 and the fuel spray amount of the upstream injector 39 and the downstream injector 20. This feature will be explained in more detail later.

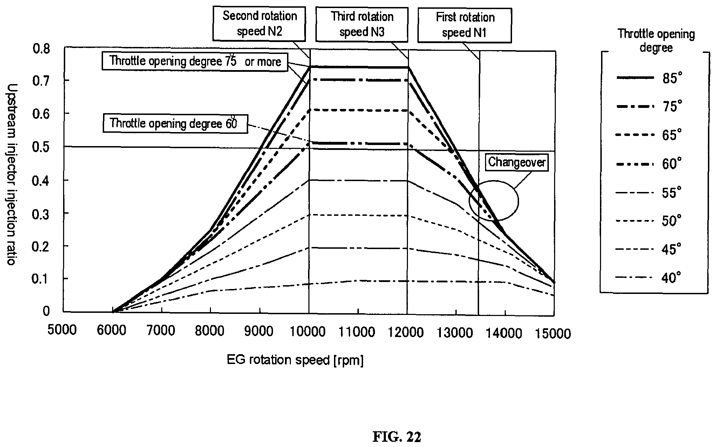

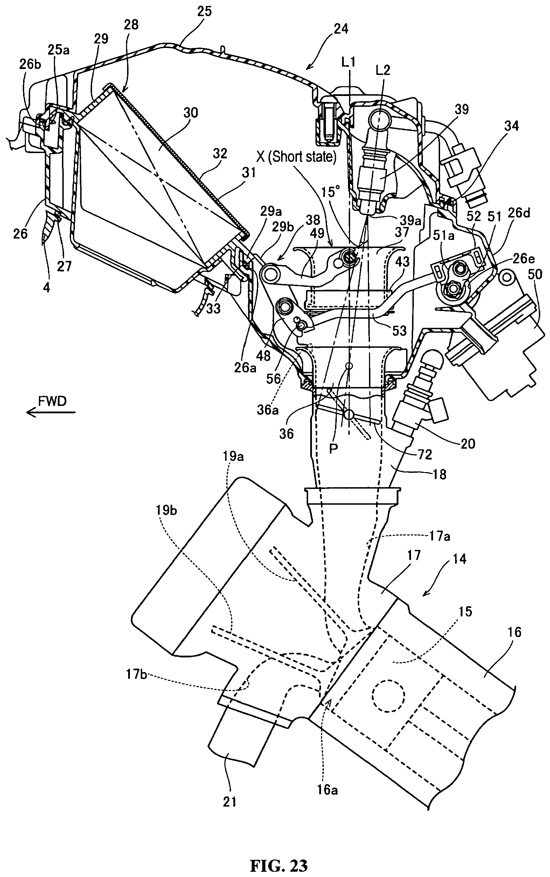

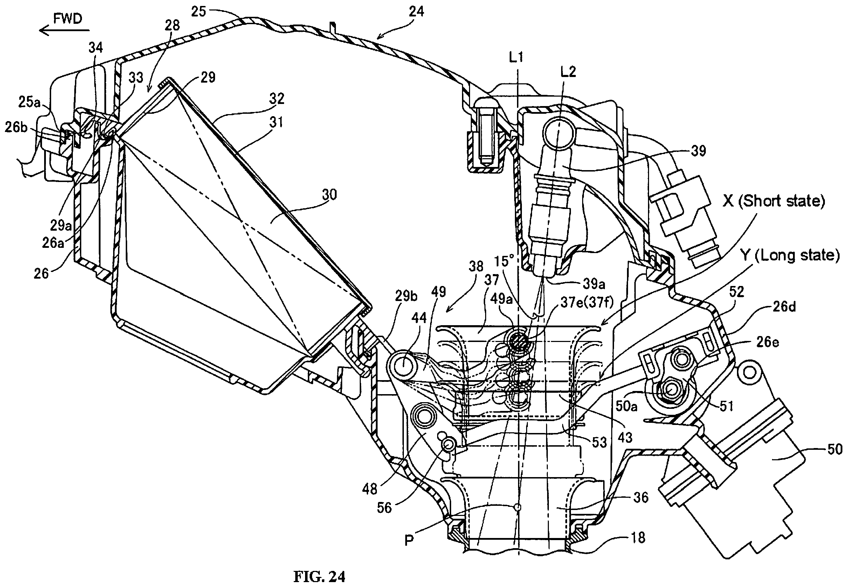

FIG. 22 is a figure that illustrates a changeover operation that changes the length of the intake pipe in correspondence with changes in the engine rotation speed and the throttle opening degree, and a fuel injection ratio of the upstream injector and the downstream injector. In addition, FIG. 23 and FIG. 24 are figures that illustrate the fuel spray with respect to the intake pipe of the upstream injector. Next, the changeover operation that changes the length of the intake pipe, and the spray of fuel of the upstream injector 39 and the downstream injector 20 will be explained with reference to FIG. 3, FIG. 6, FIG. 7, FIG. 9, FIG. 10, FIG. 21 to FIG. 24.

First, as shown in FIG. 22, regardless of the throttle opening degree, when the rotation speed of the engine 14 (refer to FIG. 3) exceeds around 6000 rpm, spray of fuel by the upstream injector 39 (refer to FIG. 23) is started. Then, as the rotation speed of the engine 14 increases, the ratio of the fuel injection amount of the upstream injector 39 with respect to the downstream injector 20 (refer to FIG. 23) increases.

In addition, when the throttle opening degree is less than 60 degrees, or when the rotation speed of the engine 14 (refer to FIG. 3) is equal to or less than around 13500 rpm (first rotation speed N1), the intake pipe is formed by the moveable funnel 37, the fixed funnel 36, the throttle body 18, and the intake port 17a, and the moveable funnel 37 is positioned at the abutting position X. As a result, the intake pipe length is maintained to be long because it includes the moveable funnel 37 section. Furthermore, as shown in FIG. 3, when the intake pipe is long, the center line of the moveable funnel 37 and the center line L1 of the fixed funnel 36 match.

Note that, in this embodiment, as shown in FIG. 22, within a range where the throttle opening degree is equal to or more than 60 degrees, and the rotation speed of the engine 14 (shown in FIG. 3) is equal to or more than around 10000 rpm (second rotation speed N2) and equal to or less than around 12000 rpm (third rotation speed N3), the upstream injector injection ratio, which is the ratio of the injection amount of the upstream injector 39 (refer to FIG. 3) with respect to the injection amount of the downstream injector 20 (refer to FIG. 3), becomes larger than 0.5, and thus the fuel spray amount of the upstream injector 39 is more than the fuel spray amount of the downstream injector 20. Furthermore, within a range where the throttle opening degree is equal to or more than 45 degrees, and the rotation speed of the engine 14 is equal to or more than around 10000 rpm (the second rotation speed N2) and equal to or less than around 12000 rpm (the third rotation speed N3), the fuel injection ratio of the upstream injector 39 is maintained at a maximum level with respect to the fuel injection of the downstream injector 20.

Furthermore, when the throttle opening degree is equal to or more than 60 degrees, and the rotation speed of the engine 14 reaches 13500 rpm (the first rotation speed N1), drive of the moveable funnel drive motor 50 (refer to FIG. 9) moves the moveable funnel 37 upward. In this state, the intake pipe is formed by the fixed funnel 36, the throttle body 18, and the intake port 17a, and the intake pipe length is short because it does not include the moveable funnel 37 section. In addition, even when the moveable funnel 37 is being moved upward, and intake pipe is being changed from being long to being short, the upstream injector 39 sprays fuel.

Next, the changeover operation of the intake pipe will be explained. First, as described above, when the engine 14 shown in FIG. 3 is rotating at equal to or more than around 13500 rpm (the first rotation speed N1) and the throttle opening degree is equal to or more than 60 degrees, in order to optimize intake air inertia effect and pulsation effect, as shown in FIG. 23, the intake pipe is shortened. More particularly, when the engine 14 is rotating at equal to or more than around 13500 rpm (the first rotation speed N1) and the throttle opening degree is equal to or more than 60 degrees, the moveable funnel 37 is moved to the separated position X. Note that, the intake air inertia effect and pulsation effect indicate improvement in the engine intake air charging efficiency as a result of pressure variation of the intake pipe, determined by the effective intake pipe length, the effective intake pipe diameter and the effective open/close period of the intake valve, being favorable for the intake valve opening/closing timing.

More particularly, first, as shown in FIG. 6, the turning lever 51 is turned in direction G by the moveable funnel drive motor 50 of the funnel moving mechanism 38, thereby moving the moving member 52 in direction H. As a result, the moving shaft 53 moves in direction H, thereby causing the lower side link lever 47 (refer to FIG. 7) to turn in direction E. Following this, as shown in FIG. 7, the lower side link lever 47 continues to turn in direction E until the stopper 47c of the lower side link lever 47 abuts against the regulation member 36i of the support strut 36e.

As a result, the moveable funnel 37 is moved to the separated position X. Accordingly, when the engine 14 (refer to FIG. 3) is rotating at equal to or more than around 13500 rpm (the first rotation speed N1) and the throttle opening degree is equal to or more than 60 degrees, the intake pipe is formed by the fixed funnel 36, the throttle body 18 (refer to FIG. 3) and the intake port 17a (refer to FIG. 3), and thus the intake pipe is made shorter. Note that, when the engine 14 shown in FIG. 3 is rotating at equal to or more than around 13500 rpm (the first rotation speed N1) and the throttle opening degree is equal to or more than 60 degrees, because the intake pipe is made shorter, the pressure variation cycle caused by the intake air inertia effect and pulsation effect becomes quicker, and is synchronized with the high speed opening and closing of the intake valve 19a. Accordingly, intake air charging efficiency at high speed rotation is improved.

Next, when the engine 14 shown in FIG. 3 is rotating at less than around 13500 rpm (the first rotation speed N1) or the throttle opening degree is equal to or less than 60 degrees, the intake pipe is lengthened in order to obtain optimal intake air inertia effect and pulsation effect. More particularly, when the engine 14 is rotating at less than around 13500 rpm (the first rotation speed N1) or the throttle opening degree is equal to or less than 60 degrees, the moveable funnel 37 is moved to the abutting position Y.

More particularly, first, as shown in FIG. 9, the turning lever 51 is turned in direction I by the moveable funnel drive motor 50 of the funnel moving mechanism 38, thereby moving the moving member 52 in direction J. As a result, the moving shaft 53 moves in direction J, thereby causing the lower side link lever 47 (refer to FIG. 10) to turn in direction F. Following this, as shown in FIG. 10, the lower side link lever 47 continues to turn in direction F until the stopper 47d of the lower side link lever 47 abuts against the support strut 36e.

As a result, the moveable funnel 37 is moved to the abutting position Y. Accordingly, when the engine 14 (refer to FIG. 3) is rotating at low speed, the intake pipe is formed by the moveable funnel 37, the fixed funnel 36, the throttle body 18 (refer to FIG. 3) and the intake port 17a (refer to FIG. 3), and thus the intake pipe is made longer. Note that, when the engine 14 shown in FIG. 3 is rotating at low speed, because the intake pipe is made longer, the pressure variation cycle caused by the intake air inertia effect and pulsation effect becomes longer, and is synchronized with the low speed opening and closing of the intake valve 19a. Accordingly, air intake efficiency at low speed rotation is improved.

Next, FIG. 23 and FIG. 24 will be used to explain the spray of fuel of the upstream injector 39.

First, as can be seen from FIG. 23, the upstream injector 39 sprays fuel at the static spray angle of around 15 degrees toward the intersection point P of the center line L1 of the fixed funnel 36 and the center line L2 of the upstream injector 39, the intersection point P being positioned further to the lower side than the upper end surface of the opening 36a of the fixed funnel 36. At this time, the fuel from the upstream injector 39 is sprayed within the static spray angle (around 15 degrees) and does not adhere to an inside wall surface of the moveable funnel 37 and an inside wall surface of the fixed funnel 36.

Note that, in this embodiment, when the engine 14 is rotating at equal to or more than around 13500 rpm (the first rotation speed N1) and the throttle opening degree is equal to or more than 60 degrees, the moveable funnel 37 is moved upward along the track shown in FIG. 24. More particularly, the upper side link lever 46 and the lower side link lever 47 have different radiuses of turn since their lengths are different, and thus when the moveable funnel 37 is moved upward, the moveable funnel 37 moves along a track that is slightly bowed out in the opposite direction from the running direction. Given this, when the moveable funnel 37 reaches the separated position X, the center line of the moveable funnel 37 matches the center line L1 of the fixed funnel 36 as is the case when the moveable funnel 37 is positioned at the abutting position Y. In the movement track of the moveable funnel 37, the fuel spayed by the upstream injector 39 at the static spray angle (around 15 degrees), as shown in FIG. 24, is sprayed such that it does not normally adhere to the inside wall surface of the moveable funnel 37.

Furthermore, when the moveable funnel 37 has moved upward and the intake pipe is shortened, as shown in FIG. 23, the fuel sprayed by the upstream injector 39 at the static spray angle (around 15 degrees), is sprayed such that it does not adhere to the inside wall surface of the moveable funnel 37.

In this embodiment, as described above, the upstream injector 39 is disposed, with respect to the center line L1 of the fixed funnel 36, at the opposite side to the side of the air filter 28, which is where the air taken into the moveable funnel 37 is introduced from. Accordingly, the upstream injector 39, which is likely to generate flow resistance in the flow route of the air taken from the air filter 28 into the moveable funnel 37, can be disposed at a position far from the air filter 28, which is where the air is introduced from. As a result, flow resistance of the air taken into the moveable funnel 37 can be inhibited from increasing, and thus air intake efficiency can be inhibited from reducing. Moreover, in the movement track along which the moveable funnel 37 moves upward and downward, at least the main portion of the flow of the fuel sprayed from the upstream injector 39 does not adhere to the inside wall surface of the moveable funnel 37. Thus, the fuel sprayed from the upstream injector 39 passes through the moveable funnel 37 without fuel dripping from the inside wall surface of the moveable funnel 37. As a result, it is possible to inhibit the occurrence of dripping of fuel from the inside wall surface of the moveable funnel 37 caused by fuel adhering to the inside wall surface of the moveable funnel 37. Accordingly, the occurrence of dripping of fuel due to adherence of the fuel sprayed from the upstream injector 39 on the inside wall surface of the moveable funnel 37 can be inhibited, and reduction in air intake efficiency can be inhibited.

In addition, in this embodiment, at least the main portion of the fuel spray from the upstream injector 39 is within the range of the movement track of the space within the moveable funnel 37, and thus dripping of fuel due to fuel adhering to the inside wall surface of the moveable funnel 37 can be inhibited.

Furthermore, in this embodiment, the center line L2 of the upstream injector 39 is positioned within the range of the movement track of the space inside the moveable funnel 37, and thus at least the main portion of the fuel spray from the upstream injector 39 is easily caused to be within the movement track of the space within the moveable funnel 39.

Moreover, in this embodiment, as described above, the upstream injector 39 is disposed such that the center line L2 of the upstream injector 39 inclines at around 5 degrees to 10 degrees with respect to the center line L1 of the fixed funnel 36 to the opposite side from the air filter 28, which is where air is introduced from. As a result, the upstream injector 39 is disposed to the rear side, and the fuel sprayed from the upstream injector 39 toward the moveable funnel 37 is within the static spray angle (around 15 degrees) and does not adhere to the inside wall surface of the moveable funnel 37.

Furthermore, in this embodiment, as described above, the upstream injector 39 sprays fuel toward the intersection point P of the center line L1 of the fixed funnel 36 and the center line L2 of the upstream injector 39, the intersection point P being positioned further to the lower side than the upper end surface of the opening 36a of the fixed funnel 36. As a result, within the static spray angle at which fuel is sprayed from the upstream injector 39, fuel is easily inhibited from adhering to the inside wall surface of the fixed funnel 36 and the inside wall surface of the moveable funnel 37.

Moreover, in this embodiment, as described above, the upstream injector 39 sprays fuel at the static spray angle of around 15 degrees, and the fuel sprayed at the static spray angle of around 15 degrees by the upstream injector 39 does not adhere to the inside wall surface of the moveable funnel 37 within the movement track of the moveable funnel 37. As a result, at least within the static spray angle of around 15 degrees that forms the main portion of the fuel from the upstream injector 39, fuel does not normally adhere to the inside wall surface of the moveable funnel 37.

In addition, in this embodiment, as described above, the fuel sprayed at the static spray angle of around 15 degrees by the upstream injector 39 does not adhere to the inside wall surface of the fixed funnel 36. As a result, it is possible to inhibit fuel adherence at least within the static spray angle of around 15 degrees that forms the main portion of the fuel from the upstream injector 39 for not just the moveable funnel 37 but also the inside wall surface of the fixed funnel 36.

Moreover, in this embodiment, as described above, the upper side link lever 46 and the lower side link lever 47 turn with different radiuses of turn, and the moveable funnel 37 adopts a structure in which the center line of the moveable funnel 37 before movement and after movement matches the center line L1 of the fixed funnel 36. Accordingly, the flow of air that is taken into the fixed funnel 36 after having passed through the moveable funnel 37 is linear, and thus it is easily possible to inhibit air flow resistance from increasing.

Furthermore, this embodiment may further include: the downstream injector 20, disposed to the lower side of the fixed funnel 36, that sprays fuel toward the intake port 17a; the throttle valve 72 that adjusts the intake amount of air-fuel mixture of fuel and air that is taken into the engine 14; the throttle motor 71 that opens and closes the throttle valve 72; and the ECU 70 that adjusts the ratio of the fuel sprayed from the upstream injector 39 and the downstream injector 20 based on the rotation speed of the engine 14, and the throttle opening degree detected from the opening degree of the throttle valve 72 that is opened and closed by the throttle motor 71. If this structure is adopted, the fuel injection amount injected by the upstream injector 39 and the downstream injector 20 can easily be adjusted in accordance with the rotation speed of the engine 14 and the throttle opening degree.

Furthermore, in this embodiment, as described above, the ECU 70 performs control such that, when the rotation speed of the engine 14 is equal to or more than around 13500 rpm (the first rotation speed N1) and the throttle opening degree is equal to or more than 60 degrees, the moveable funnel 37 is moved upward to change to the shortened state. In addition, when the moveable funnel 37 is moved to change to the shortened state, control is performed such that the fuel spray amount of the upstream injector 39 becomes less than the fuel spray amount of the downstream injector 20. As a result, when the moveable funnel 37 is moving upward, in the case that the flow of air from the air filter 28 is disturbed, the impact on the spray of fuel from the upstream injector 39 is made smaller. Accordingly, when the moveable funnel 37 is being moved upward, disturbance of the spray of fuel from the upstream injector 39 is inhibited, and thus fuel from the upstream injector 39 can be inhibited from adhering to the inside wall surface of the moveable funnel 37.

Note that, the embodiment as described above is, in all of its features, merely an example, and it should be understood that the embodiment does not limit the invention in any way. The scope of the invention is not limited by the above description but instead encompasses the scope of the claims. Moreover, the invention includes all modified forms that come within the scope of the claims or are equivalent thereto.

For example, in the above-described embodiment, an example is described in which the invention is applied to a motorcycle. However, the invention is not limited to this configuration, and may be applied to a vehicle other than a motorcycle.

Furthermore, in the above-described embodiment, the invention is applied to a vehicle equipped with a four cylinder engine. However, the invention is not limited to this configuration, and may be applied to a vehicle equipped with an engine that has more than four cylinders, or a vehicle equipped with an engine with a single cylinder.

In addition, the above embodiment describes an example in which the center line of the upstream injector inclines with respect to the center line of the fixed funnel to the opposite side from the side of the air filter at an angle of around 5 degrees to around 10 degrees. However, the invention is not limited to this configuration, and so long as the main portion of the fuel from the upstream injector does not adhere to the inside wall surfaces of the moveable funnel and the fixed funnel, the angle of inclination may be less than 5 degrees or greater than 10 degrees.

Moreover, the above embodiment describes an example in which the static spray angle of the upstream injector is around 15 degrees. However, the invention is not limited to this configuration, and so long as fuel does not adhere to the inside wall surfaces of the moveable funnel and the fixed funnel within the static spray angle of the around 15 degrees of fuel from the upstream injector, the static spray angle may be an angle larger than 15 degrees. If this configuration is adopted, atomization of the fuel is promoted, and thus air and the atomized fuel can be mixed more efficiently.

Furthermore, in this embodiment, an example is described in which the upper side link lever and the lower side link lever have a structure in which the length of the upper side link lever is longer than the length of the lower side link lever. However, the invention is not limited to this configuration, and may adopt a structure in which the length of the lower side link lever is longer than the length of the upper side link lever.

### Description of the Reference Numerals and Signs

- 1: Motorcycle (Vehicle)
- 14: Engine
- 17a: Intake port
- 20: Downstream injector (Second injector)
- 24: Cleaner box (Air introduction member)
- 28: Air filter (Introduction opening)
- 36: Fixed funnel
- 36a: Opening
- 37: Moveable funnel
- 39: Upstream injector (First injector)
- 46: Upper side link lever (First arm)
- 47: Lower side link lever (Second arm)
- 70: ECU (Control portion)
- 71: Throttle motor (Throttle opening-closing member)
- 72: Throttle valve
- L1: Center line
- L2: Center line
- P: Intersection
- N1: First rotation speed
- N2: Second rotation speed
- N3: Third rotation speed

## Claims

1. An engine including:
an intake port (17a);
a fixed funnel (36) that introduces air to the intake port (17a) and having a center line (L1);
a moveable funnel (37) capable of moving upward and downward along a movement track toward an intake opening of the fixed funnel (36), that introduces air along with the fixed funnel (36) to the intake port (17a);
an air introduction member (24) including an introduction opening (28) for air that is taken into the moveable funnel (37), the introduction opening (28) being on one side of the center line (L1); wherein a first injector (39) sprays fuel toward the moveable funnel (37), a fuel injection member (39a) being the lowermost part of the first injector (39) being located above the movable funnel (37) even when the movable funnel (37) is at its topmost position; **characterised in that**,
the first injector (39) is disposed on the opposite side of the center line of the fixed funnel (L1) to the introduction opening (28), the first injector (39) sprays the fuel at a determined spray angle toward the intersection point (P) of the centre line (L1) of the fixed funnel (36) and a center line (L2) of the upstream injector (39), the intersection point (P) being positioned further to the lower side than the upper end surface of the opening (36a) of the fixed funnel (36), so that at least a main portion of a flow of the fuel sprayed from the first injector (39) does not adhere to an inside wall surface of the moveable funnel (37).

2. A vehicle (1) comprising:
an engine (14) according to claim 1.

3. The vehicle according to claim 2, wherein
at least a main portion of the fuel sprayed from the first injector (39) is within a movement track defined by an inside wall surface of the moveable funnel.

4. The vehicle according to claim 2 or 3, wherein the center line of the first injector (L2) is disposed within a movement track defined by an inside wall surface of the moveable funnel.

5. The vehicle according to any of claims 2 to 4, further comprising:
an arm member that supports the moveable funnel (37) such that the funnel can move upward and downward, wherein
the arm member includes a first arm (46) and a second arm (47) that are turnable, and
the moveable funnel (37) is moved by the first arm (46) and the second arm (47).

6. The vehicle according to claim 5, wherein the first arm (46) and the second arm (47) of the arm member turn with different radiuses of turn, and
the moveable funnel (37) is configured such that a center line of the moveable funnel before movement and after movement matches with the center line of the fixed funnel (L1).

7. The vehicle according to any of claims 2 to 6, further comprising:
a second injector (20), disposed to the lower side of the fixed funnel (36), that sprays fuel toward the intake port (17a);
a throttle valve (72) that adjusts an inflow amount of air-fuel mixture that is taken into the engine (14);
a throttle opening-closing member (71) that opens and closes the throttle valve (72); and
a control portion that adjusts a ratio of the fuel sprayed by the first injector (39) and the second injector (20) based on a rotation speed of the engine and a throttle opening degree of the throttle valve (72), which is opened and closed by the throttle opening-closing member (71).

8. The vehicle according to claim 7, wherein the control portion performs control such that, when the rotation speed of the engine is equal to or more than a first rotation speed and the throttle opening degree is equal to or more than a determined angle, the moveable funnel (37) is moved upward to change a length of an intake pipe to a shortened state, and when the length of the intake pipe of the moveable funnel is changed to the shortened state, the control portion performs control such that a spray amount of the fuel from the first injector (39) is less than a spray amount of the fuel from the second injector (20).

9. The vehicle according to claim 8, wherein the control portion performs control such that, when the throttle opening degree is equal to or more than the determined angle, and the rotation speed of the engine is equal to or more than a second rotation speed and equal to or less than a third rotation speed, the spray amount of the fuel from the first injector (39) is larger than the spray amount of the fuel from the second injector (20).

## Patentansprüche

1. Motor, der Folgendes einschließt:
einen Ansaugkanal (17a),
einen unbeweglichen Luftschacht (36), der Luft in den Ansaugkanal (17a) einleitet und eine Mittellinie (L1) hat,
einen beweglichen Luftschacht (37), der dazu in der Lage ist, sich aufwärts und abwärts entlang einer Bewegungsbahn zu einer Ansaugöffnung des unbeweglichen Luftschachts (36) zu bewegen, der zusammen mit dem unbeweglichen Luftschacht (36) Luft in den Ansaugkanal (17a) einleitet,
ein Lufteinleitungselement (24), das eine Einleitungsöffnung (28) für Luft, die in den beweglichen Luftschacht (37) aufgenommen wird, einschließt, wobei sich die Einleitungsöffnung (28) auf einer Seite der Mittellinie (L1) befindet, wobei
eine erste Einspritzvorrichtung (39) Kraftstoff zu dem beweglichen Luftschacht (37) hin einspritzt, wobei ein Kraftstoff-Einspritzelement (39a), das der unterste Teil der ersten Einspritzvorrichtung (39) ist, oberhalb des beweglichen Luftschachts (37) angeordnet ist, selbst wenn sich der bewegliche Luftschacht (37) an seiner höchsten Stellung befindet, **dadurch gekennzeichnet, dass**
die erste Einspritzvorrichtung (39) auf der zu der Einleitungsöffnung (28) entgegengesetzten Seite der Mittellinie (L1) des unbeweglichen Luftschachts angeordnet ist,
die erste Einspritzvorrichtung (39) den Kraftstoff in einem bestimmten Sprühwinkel zu dem Schnittpunkt (P) der Mittellinie (L1) des unbeweglichen Luftschachts (36) und einer Mittellinie (L2) der stromaufwärts gelegenen Einspritzvorrichtung (39) hin sprüht, wobei der Schnittpunkt (P) weiter zu der unteren Seite angeordnet ist als die obere Endfläche der Öffnung (36a) des unbeweglichen Luftschachts (36), so dass wenigstens ein Hauptteil eines Stroms des aus der ersten Einspritzvorrichtung (39) gesprühten Kraftstoffs nicht an einer Innenwandfläche des beweglichen Luftschachts (37) haftet.

2. Fahrzeug (1), das Folgendes umfasst:
einen Motor (14) nach Anspruch 1.

3. Fahrzeug nach Anspruch 2, wobei
sich wenigstens ein Hauptteil des aus der ersten Einspritzvorrichtung (39) gesprühten Kraftstoffs innerhalb einer Bewegungsbahn befindet, die durch eine Innenwandfläche des beweglichen Luftschachts definiert wird.

4. Fahrzeug nach Anspruch 2 oder 3, wobei
die Mittellinie (L2) der ersten Einspritzvorrichtung innerhalb einer Bewegungsbahn angeordnet ist, die durch eine Innenwandfläche des beweglichen Luftschachts definiert wird.

5. Fahrzeug nach einem der Ansprüche 2 bis 4, das ferner Folgendes umfasst:
ein Armelement, das den beweglichen Luftschacht (37) derart stützt, dass sich der Luftschacht aufwärts und abwärts bewegen kann, wobei
das Armelement einen ersten Arm (46) und einen zweiten Arm (47) einschließt, die drehbar sind, und
der bewegliche Luftschacht (37) durch den ersten Arm (46) und den zweiten Arm (47) bewegt wird.

6. Fahrzeug nach Anspruch 5, wobei
sich der erste Arm (46) und der zweite Arm (47) des Armelements mit unterschiedlichen Drehungsradien drehen und
der bewegliche Luftschacht (37) derart konfiguriert ist, dass eine Mittellinie des beweglichen Luftschachts vor der Bewegung und nach der Bewegung mit der Mittellinie (L1) des unbeweglichen Luftschachts übereinstimmt.

7. Fahrzeug nach einem der Ansprüche 2 bis 6, das ferner Folgendes umfasst:
eine zweite Einspritzvorrichtung (20), angeordnet an der unteren Seite des unbeweglichen Luftschachts (36), die Kraftstoff zu dem Ansaugkanal (17a) hin sprüht,
eine Drosselklappe (72), die eine Einströmungsmenge von Luft-KraftstoffGemisch einstellt, das in den Motor (14) aufgenommen wird,
ein Drossel-Öffnungs-Schließelement (71), das die Drosselklappe (72) öffnet und schließt, und
einen Steuerungsabschnitt, der ein Verhältnis des durch die erste Einspritzvorrichtung (39) und die zweite Einspritzvorrichtung (20) gesprühten Kraftstoffs auf der Grundlage einer Drehzahl des Motors und einem Drosselöffnungsgrades der Drosselklappe (72), die durch das Drossel-Öffnungs-Schließelement (71) geöffnet und geschlossen wird, einstellt.

8. Fahrzeug nach Anspruch 7, wobei
der Steuerungsabschnitt die Steuerung derart durchführt, dass, wenn die Drehzahl des Motors gleich einer ersten Drehzahl oder größer als dieselbe ist und der Drosselöffnungsgrad gleich einem bestimmten Winkel oder größer als derselbe ist, der bewegliche Luftschacht (37) nach oben bewegt wird, um eine Länge eines Ansaugrohres zu einem verkürzten Zustand zu ändern, und wenn die Länge des Ansaugrohres des beweglichen Luftschachts zu dem verkürzten Zustand geändert ist, der Steuerungsabschnitt die Steuerung derart durchführt, dass eine Sprühmenge des Kraftstoffs aus der ersten Einspritzvorrichtung (39) geringer ist als eine Sprühmenge des Kraftstoffs aus der zweiten Einspritzvorrichtung (20).

9. Fahrzeug nach Anspruch 8, wobei
der Steuerungsabschnitt die Steuerung derart durchführt, dass, wenn der Drosselöffnungsgrad gleich dem bestimmten Winkel oder größer als derselbe ist und die Drehzahl des Motors gleich einer zweiten Drehzahl oder größer als dieselbe und gleich einer dritten Drehzahl oder geringer als dieselbe ist, die Sprühmenge des Kraftstoffs aus der ersten Einspritzvorrichtung (39) größer ist als die Sprühmenge des Kraftstoffs aus der zweiten Einspritzvorrichtung (20).

## Revendications

1. Moteur, incluant :
un orifice d'admission (17a) ;
un entonnoir fixe (36) introduisant de l'air dans l'orifice d'admission (17a) et comportant une ligne médiane (L1) ;
un entonnoir mobile (37) pouvant se déplacer vers le haut et vers le bas le long d'une piste de déplacement vers une ouverture d'admission de l'entonnoir fixe (36) introduisant de l'air ensemble avec l'entonnoir fixe (36) vers l'orifice d'admission (17a) ;
un élément d'introduction d'air (24) incluant une ouverture d'introduction (28) de l'air admis dans l'entonnoir mobile (37), l'ouverture d'introduction (28) étant située sur un côté de la ligne médiane (L1) ; dans lequel :
un premier injecteur (39) pulvérise du carburant vers l'entonnoir mobile (37), un élément d'injection de carburant (39a) constituant la partie inférieure extrême du premier injecteur (39) étant agencé au-dessus de l'entonnoir mobile (37), même lorsque l'entonnoir mobile (37) se trouve dans sa position supérieure extrême ; **caractérisé en ce que** :
le premier injecteur (39) est disposé sur le côté de la ligne médiane de l'entonnoir fixe (L1) opposé à l'ouverture d'introduction (28) ;
le premier injecteur (39) pulvérise le carburant à un angle de pulvérisation déterminé vers le point d'intersection (P) de la ligne médiane (L1) de l'entonnoir fixe (36) et d'une ligne médiane (L2) de l'injecteur amont (39), le point d'intersection (P) étant positionné davantage vers le côté inférieur que la surface d'extrémité supérieure de l'ouverture (36a) de l'entonnoir fixe (36), de sorte qu'au moins une partie principale de l'écoulement du carburant pulvérisé à partir du premier injecteur (39) n'adhère pas à une surface de paroi interne de l'entonnoir mobile (37).

2. Véhicule (1), comprenant :
un moteur (14) selon la revendication 1.

3. Véhicule selon la revendication 2, dans lequel :
au moins une partie principale du carburant pulvérisé à partir du premier injecteur (39) se trouve dans le cadre d'une piste de déplacement définie par une surface de paroi interne de l'entonnoir mobile.

4. Véhicule selon les revendications 2 ou 3, dans lequel :
la ligne médiane du premier injecteur (L2) est disposée dans une piste de déplacement définie par une surface de paroi interne de l'entonnoir mobile.

5. Véhicule selon l'une quelconque des revendications 2 à 4, comprenant en outre :
un élément de bras supportant l'entonnoir mobile (37) de sorte que l'entonnoir peut se déplacer vers le haut et vers le bas ; dans lequel :
l'élément de bras inclut un premier bras (46) et un deuxième bras (47) qui peuvent tourner ; et
l'entonnoir mobile (37) est déplacé par le premier bras (46) et le deuxième bras (47).

6. Véhicule selon la revendication 5, dans lequel :
le premier bras (46) et le deuxième bras (47) de l'élément de bras tournent avec différentes rayons de virage ; et
l'entonnoir mobile (37) est configuré de sorte qu'une ligne médiane de l'entonnoir mobile, avant le déplacement et après le déplacement, correspond à la ligne médiane de l'entonnoir fixe (L1).

7. Véhicule selon l'une quelconque des revendications 2 à 6, comprenant en outre :
un deuxième injecteur (20) disposé vers le côté inférieur de l'entonnoir fixe (36), pulvérisant le carburant vers l'orifice d'admission (17a) ;
une soupape d'étranglement (72) ajustant une quantité d'entrée d'un mélange d'air et de carburant admis dans le moteur (14) ;
un élément d'ouverture et de fermeture du papillon des gaz (71) ouvrant et fermant la soupape d'étranglement (72) ; et
une partie de commande, ajustant un rapport du carburant pulvérisé par le premier injecteur (39) et le deuxième injecteur (20) sur la base d'une vitesse de rotation du moteur et du degré d'ouverture du papillon des gaz de la soupape d'étranglement (72) qui est ouverte et fermée par l'élément d'ouverture et de fermeture du papillon des gaz (71).

8. Véhicule selon la revendication 7, dans lequel :
la partie de commande assure le contrôle de sorte que lorsque la vitesse de rotation du moteur est égale ou supérieure à une première vitesse de rotation, le degré d'ouverture du papillon des gaz étant égal ou supérieur à un angle déterminé, l'entonnoir mobile (37) est déplacé pour changer une longueur d'un tuyau d'admission vers un état raccourci, et lorsque la longueur du tuyau d'admission de l'entonnoir mobile est changé vers l'état raccourci, la partie de commande assure le contrôle de sorte qu'une quantité de pulvérisation du carburant à partir du premier injecteur (39) est inférieure à une quantité de pulvérisation du carburant à partir du deuxième injecteur (20).

9. Véhicule selon la revendication 8, dans lequel :
la partie de commande assure le contrôle de sorte que lorsque le degré d'ouverture du papillon des gaz est égal ou supérieur à l'angle déterminé, la vitesse de rotation du moteur étant égale ou supérieure à une deuxième vitesse de rotation et égale ou inférieure à une troisième vitesse de rotation, la quantité de pulvérisation du carburant à partir du premier injecteur (39) est supérieure à la quantité de pulvérisation du carburant à partir du deuxième injecteur (20).
